# FASCICULE DE BREVET EUROPEEN

(11) **EP 1 926 639 B1**
(45) Date de publication et mention de la délivrance du brevet: **29.12.2010**
(21) Numéro de dépôt: 06808154.6
(22) Date de dépôt: 18.09.2006
(51) Int. Cl.: B60R 19/52

(54) **ACCELEROMETRES IMPLANTES**
IMPLANTIERTE BESCHLEUNIGUNGSMESSER
IMPLANTED ACCELEROMETERS

(30) Priorité: 19.09.2005 FR 0509552
(43) Date de publication de la demande: 04.06.2008
(73) Titulaire: PEUGEOT CITROËN AUTOMOBILES S.A., 78140 Vélizy Villacoublay (FR); Robert Bosch GmbH, 70839 Gerlingen-Schillerhöhe (DE)
(72) Inventeur: GAUTHIER, Jean-Pierre, F-94800 Villejuif (FR); PERIOT, Stéphanie, F-75014 Paris (FR); PERUS, Vincent, F-25200 Montbeliard (FR); KOCHER, Pascal, 70839 Gerlingen (DE); WALTHER, Ralf, 71638 Ludwigsburg (DE)
(74) Mandataire: Blot, Philippe Robert Emile
(86) Numéro de dépôt international: PCT/FR2006/002132
(87) Numéro de publication internationale: WO 2007/034061

(56) Documents cités:
- EP-A- 1 457 390
- WO-A-2006/123236
- DE-A1- 10 314 862
- DE-A1- 19 719 519
- DE-A1- 19 937 195

## Description

La présente invention est relative à un bloc avant pour véhicule automobile, du type comprenant un bouclier propre à envelopper au moins une partie de la structure du véhicule et au moins un capteur de détection de collision.

Les véhicules automobiles comprennent de plus en plus de capteurs concernant le domaine de la sécurité. En particulier, ils comportent des capteurs mis en place pour augmenter la protection du piéton. La détection d'une collision avec un piéton par le capteur déclenche des mesures de sécurité conçues pour protéger le piéton comme par exemple l'activation d'un capot.

Le bloc avant du véhicule comporte des capteurs fixés au bouclier qui assurent la détection d'une collision et le déclenchement des mesures de sécurité lors d'une collision entre le bouclier et un piéton ou lors d'une collision entre un pare-chocs relié au bouclier et un piéton.

Un tel bloc avant est par exemple décrit dans DE 197 19 519, DE 199 37 195 ou DE 103 14 862. Le document EP 1457390 décrit un bloc avant selon le préambule de la revendication 1.

Cependant, les exigences d'aspect de la face visible du véhicule sont entravées par le rattachement des capteurs au bouclier par l'intermédiaire d'accroches tels que des fûts ou des nervures réalisés par moulage sur le bouclier. Souvent, la courbure de la face visible et la forme du capteur ne sont pas complémentaires et des lignes de style doivent être ajoutées sur la face visible afin de cacher le capteur et ainsi garder l'aspect désiré de la face visible.

Le but de l'invention est donc de fournir un bloc avant qui permet le rattachement des capteurs sans atteinte à l'aspect de la face visible du véhicule.

A cet effet, l'invention a pour objet un bloc avant conforme à la revendication 1.

Suivant d'autres caractéristiques de l'invention :
- la ou chaque patte est solidarisée sur la face intérieure du bouclier ;
- la solidarisation de la ou chaque patte est réalisée par soudure ou par collage ;
- la ou chaque patte est venue de moulage ou de forme avec le boucler;
- la ou chaque patte est venue de moulage ou de forme avec la grille
- la ou chaque patte est montée par soudure ou par collage avec la grille ;
- la ou chaque patte délimite une ouverture recevant un moyen de fixation pour solidariser le capteur à la patte ;
- la grille comprend une patte sur chaque extrémité ;
- la ou chaque patte comprend un fût intégré à la patte, le fût recevant une tige solidarisant le capteur à la patte ;
- le capteur est solidarisé seulement à la patte et est interposé entre a patte et la face intérieure du bouclier ;
- la grille est surmoulée au moins partiellement sur le ou chaque capteur ;
- le capteur comporte la ou chaque patte et la ou chaque patte est reliée à la grille d'entrée d'air ;
- la ou chaque patte est séparée de la face intérieure du bouclier par ure distance de moins de 50 mm ;
- la ou chaque patte comprend au moins une zone de liaison au bouclier ; et
- le bouclier et la patte sont réalisées en polypropylène.

L'invention a également pour objet un véhicule automobile comportant un bloc avant tel que défini ci-dessus.

L'invention sera mieux comprise à la lecture de la description qui va suivre, dans laquelle un exemple de réalisation va être décrit en regard des dessins annexés sur lesquels :
- La figure 1 est une vue en élévation d'un bloc avant selon l'invention ;
- la figure 2 est une vue en coupe horizontale transversale d'un bloc avant selon l'axe II de la Figure 1 ;
- la figure 3 est une vue partielle en perspective de la grille d'entrée d'air des figures 1 et 2 ; et
- la figure 4 est une vue partielle en perspective de la grille d'entrée d'air selon une variante de la présente invention.

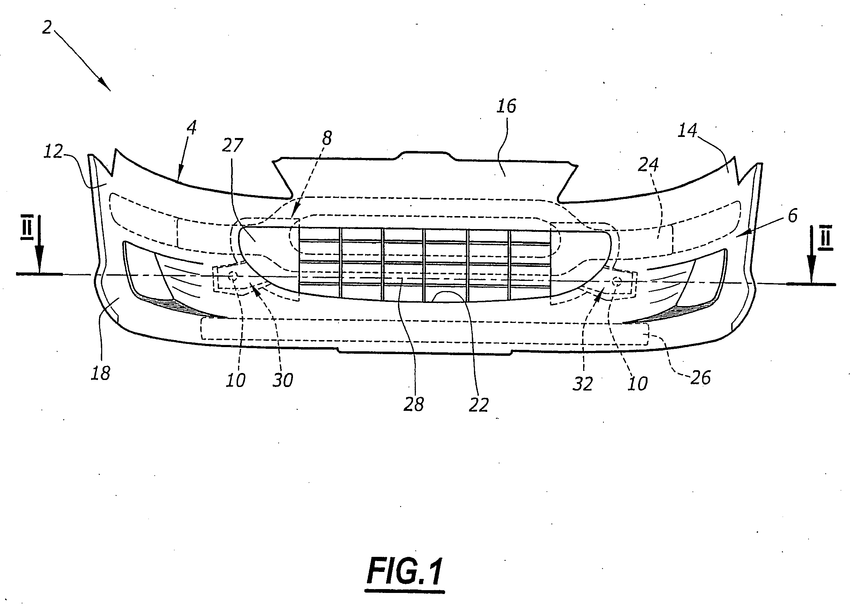

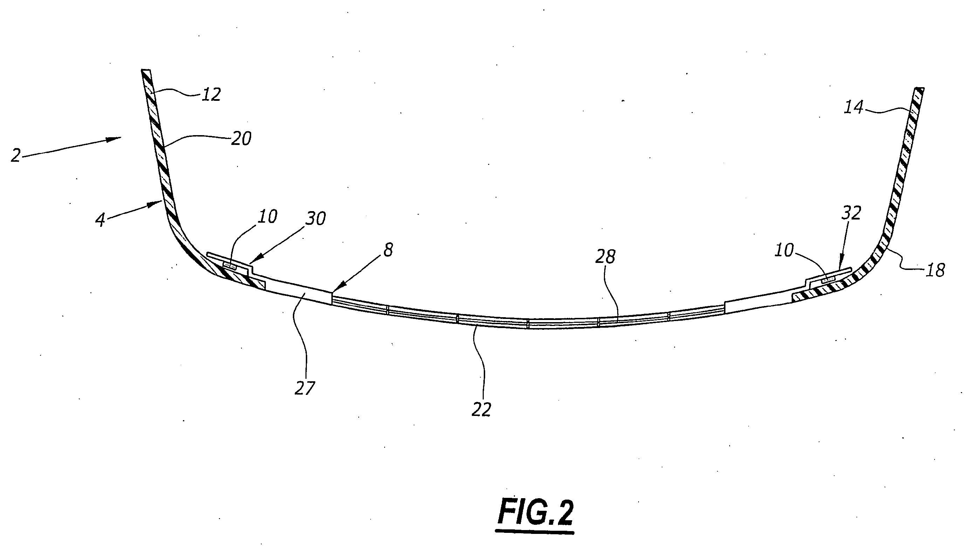

Un bloc avant 2 d'un véhicule automobile est illustré sur les figures 1 et 2. Le bloc 2 comprend un bouclier 4 propre à envelopper la structure du véhicule, un pare-chocs 6 fixé sur le bouclier 4, une grille d'entrée d'air 8 et un capteur de détection de collision 10.

Le bloc avant 2 est destiné à être attaché à la structure (non représentée) du véhicule. En particulier à la partie avant de la structure qui correspond à la portion située devant le conducteur et qui comporte les organes essentiels du véhicule comme le moteur.

Le boulier 4 présente en section horizontale (Figure 2) une forme de U comportant deux extrémités 12, 14 sensiblement parallèles s'étendant dans une direction suivant sensiblement la longueur du véhicule et une partie centrale 16 raccordée aux deux extrémités 12, 14 qui s'étend suivant la largeur du véhicule.

Le bouclier 4 comprend une face extérieure 18 susceptible d'entrer en contact avec le piéton lors d'une collision. C'est la face visible du bouclier lorsque ce dernier est monté sur le véhicule. Le bouclier 4 comprend aussi une face intérieure 20 qui est en vis-à-vis de la structure du véhicule lorsque le bouclier 4 est monté sur le véhicule.

Chaque extrémité 12, 14 comporte un corps délimitant un orifice destiné à recevoir une tige et un écrou pince pour la fixation du bouclier 4 à la structure du véhicule.

La partie centrale 16 du bouclier comprend un corps délimitant une ouverture 22 sensiblement oblongue dans l'exemple illustré à la figure 1. L'ouverture 22 est destinée à laisser entrer l'air pour, notamment, refroidir le moteur. La grille d'entrée d'air 8 est fixée dans cette ouverture 22.

Le pare-chocs 6 est fixé sur la structure du véhicule. Il comprend un élément supérieur 24 et un élément inférieur 26 qui sont respectivement situés en vis-à-vis de la partie supérieure et inférieure de la face intérieure 20 du bouclier 4. Les éléments supérieur 24 et inférieur 26 permettent de fixer le bouclier 4 a la structure par l'intermédiaire, par exemple, de tiges et d'écrous pince.

La grille d'entrée d'air 8 comprend un corps 27 sensiblement plan délimitant un passage de circulation d'air 28 et deux pattes 30. 32 de support d'un capteur disposées à ses extrémités.

La grille 8 est attachée à la face intérieure 20 du bouclier 4 par l'intermédiaire d'accroches de façon à ce que le passage de circulation d'air 28 soit dans l'axe de l'ouverture oblongue 22 du bouclier 4.

Le passage 28 a une forme sensiblement rectangulaire et comporte des lames 34 formant une grille notamment destinée à guider le flux d air entrant.

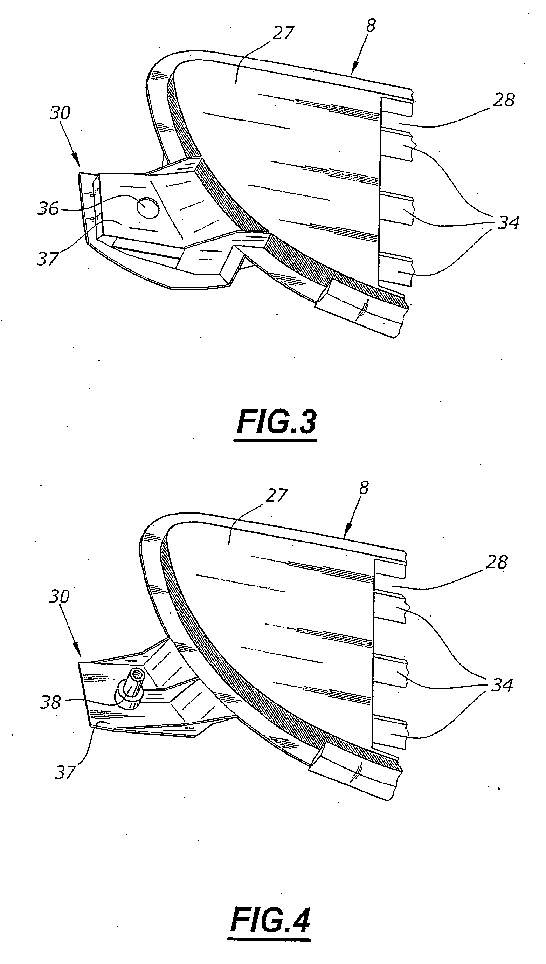

Les pattes 30, 32 sont venues de moulage ou de forme avec la grille 8. Elles délimitent chacune une ouverture 36 propre à recevoir une tige et un écrou pince afin de solidariser le capteur de détection de collision 10 à la grille d'entrée d'air 8 (Figure 3).

Chaque patte 30, 32 est située de part et d'autre du corps 27 et s'étend sensiblement parallèlement le long de la face intérieure 20 du bouclier 4. Elles sont séparées de la face intérieure 20 du bouclier 4 par une distance de moins de 50 mm et de préférence comprise entre 5 et 40mm.

Les pattes 30, 32 s'étendent sensiblement dans le prolongement du corps 27. Chaque capteur 10 est fixé seulement sur sa patte associée 30, 32 en vis-à-vis de la face intérieure 20 du bouclier 4. A cet effet, chaque patte 30, 32 définit un logement 37 de réception d'un capteur 10 de sorte que la distance entre le capteur 10 et la patte 30, 32 soit comprise entre 0 et 25mm.

Les pattes 30, 32 et/ou le bouclier 4 sont réalisés préférentiellement en polypropylène.

Lors d'une collision entre le véhicule et un piéton, l'impact entre le piéton et le bouclier 4 est détecté par chaque capteur 10 qui est positionné proche du bouclier 4 et lui est lié par l'intermédiaire de la grille 8. Le signal d'un des capteurs 10 permet le déclenchement desdites mesures de sécurité conçu pour protéger le piéton comme, par exemple, l'activation d'un capot.

Grâce au rattachement des capteurs 10 à la patte 30, 32 de la grille d'entrée d'air 8, les exigences d'aspect de la face visible du boulier 4 ne sont plus entravées.

Selon une variante chaque patte 30, 32 comprend au moins une zone de liaison au bouclier 4, notamment par l'extrémité opposée à celle reliant la patte 30, 32 à la grille 8.

Selon une autre variante, chaque patte 30, 32 comprend au moins une zone de soudure ayant une épaisseur d'au moins 2 mm, la zone de soudure étant destinée à raccorder la patte 30, 32 au bouclier 4.

Selon encore une autre variante et comme illustré en Figure 4, chaque patte 30, 32 comprend un fût 38 intégré à la patte 30, 32. Le fût 38 est propre à recevoir une tige afin de solidariser le capteur 10 à la patte 30, 32.

Selon une autre variante la ou chaque patte 30, 32 est montée par soudure ou par collage avec la grille 8.

Selon encore une autre variante, le capteur 10 comporte une ou plusieurs pattes 30, 32. La ou chaque patte est surmoulée totalement ou partiellement sur le capteur. La ou chaque patte peut ainsi être directement reliée au bouclier 4 ou à la grille 8 comme, par exemple, par collage ou par soudage. La ou chaque patte 30, 32 reliée au capteur 10 peut ainsi s'étendre sensiblement à proximité ou en liaison de la grille 8. La ou chaque patte 30, 32 est de préférence solidarisée sur la face intérieure du bouclier 4. La ou chaque patte 30, 32 peut aussi être venue de moulage ou de forme avec le boulier 4.

Selon une autre variante, lors de la réalisation de la grille 8, la grille 8 est surmoulée totalement ou partiellement sur le ou chaque capteur 10 si bien que chaque capteur 10 est fixé sur sa patte associée 30, 32 et l'opération supplémentaire de fixation par soudage ou par collage du capteur 10 à la grille 8 est supprimée.

## Revendications

1. Bloc avant (2) pour véhicule automobile, du type comprenant :
un bouclier (4) propre à envelopper au moins une partie de la structure du véhicule ;
au moins un capteur de détection de collision (10);
une grille d'entrée d'air (8) raccordée à et située au moins en partie derrière une ouverture (22) du bouclier (4), cette grille (8) ayant un corps (27) délimitant un passage de circulation d'air (28) destinée à refroidir un moteur
**caractérisé en ce que** la grille d'entrée d'air (8) comporte au moins une patte de liaison (30, 32) reliant le ou chaque capteur de détection de collision (10), laquelle patte (30, 32) s'étendant le long de la face intérieure (20) du bouclier (4).

2. Bloc avant (2) selon la revendication 1, **caractérisé en ce que** la ou chaque patte (30, 32) est solidarisée sur la face intérieure (20) du bouclier (2).

3. Bloc avant (2) selon la revendication 2, **caractérisé en ce que** la solidarisation de la ou chaque patte (30, 32) est réalisée par soudure ou par collage.

4. Bloc avant (2) selon la revendication 2, **caractérisé en ce que** la ou chaque patte (30, 32) est venue de moulage ou de forme avec le bouclier (4).

5. Bloc avant (2) selon l'une quelconque des revendications 1 à 4, **caractérisé en ce que** la ou chaque patte (30, 32) est venue de moulage ou de forme avec la grille (8).

6. Bloc avant (2) selon l'une quelconque des revendications 1 à 4. **caractérisé en ce que** la ou chaque patte (30, 32) est montée par soudure ou par collage avec la grille (8).

7. Bloc avant (2) selon l'une quelconque des revendications précédentes, **caractérisé en ce que** la ou chaque patte (30, 32) délimite une ouverture (36) recevant un moyen de fixation pour solidariser le capteur (10) à la patte (30, 32).

8. Bloc avant (2) selon l'une quelconque des revendications précédentes, **caractérisé en ce que** la grille (8) comprend une patte (30, 32) sur chaque extrémité.

9. Bloc avant (2) selon l'une quelconque des revendications précédentes, **caractérisé en ce que** la ou chaque patte (30, 32) comprend un fût (38) intégré à la patte (30, 32), le fût (38) recevant une tige solidarisant le capteur (10) à la patte (30, 32).

10. Bloc avant (2) selon l'une quelconque des revendications 2 à 9, **caractérisé en ce que** le capteur est solidarisé seulement à la patte (30,32) et est interposé entre la patte et la face intérieure (20) du bouclier.

11. Bloc avant (2) selon la revendication 5, **caractérisé en ce que** la grille (8) est surmoulée au moins partiellement sur le ou chaque capteur (10).

12. Bloc avant (2) selon la revendication 1, **caractérisé en ce que** le capteur (10) comporte la ou chaque patte (30, 32) et la ou chaque patte (30,32) est reliée à la grille d'entrée d'air (8).

13. Bloc avant (2) selon l'une quelconque des revendications précédentes, **caractérisé en ce que** la ou chaque patte (30,32) est séparée de la face intérieure (20) du bouclier (4) par une distance de moins de 50 mm.

14. Bloc avant (2) selon l'une quelconque des revendications précédentes, **caractérisé en ce que** la ou chaque patte (30, 32) comprend au moins une zone de liaison au bouclier (4).

15. Bloc avant (2) selon l'une quelconque des revendications précédentes, **caractérisé en ce que** le bouclier (4) et la patte (30, 32) sont réalisées en polypropylène.

16. Véhicule automobile comprenant le bloc avant (2) selon l'une quelconque des revendications précédentes.

## Claims

1. Front assembly (2) for a motor vehicle of the type comprising:
a bumper shield (4) suitable for enveloping at least a portion of the structure of the vehicle;
at least one collision detection sensor (10);
an air inlet grating (8) connected to and located at least partially behind an opening (22) of the bumper shield (4), said grating (8) having a body (27) defining a passage for air flow (28) intended for cooling an engine,
**characterised in that** the air inlet grating (8) comprises at least one connection lug (30, 32) connecting the or each collision detection sensor (10), said lug (30, 32) extending along the inside face (20) of the bumper shield (4).

2. Front assembly (2) according to claim 1, **characterised in that** the or each lug (30, 32) is integrally attached to the inside face (20) of the bumper shield (4).

3. Front assembly (2) according to claim 2, **characterised in that** the integral attachment of the or each lug (30, 32) is achieved by welding or gluing.

4. Front assembly (2) according to claim 2, **characterised in that** the or each lug (30, 32) is integrally moulded or shaped with the bumper shield (4).

5. Front assembly (2) according to any one of claims 1 to 4, **characterised in that** the or each lug (30, 32) is integrally moulded or shaped with the grating (8).

6. Front assembly (2) according to any one of claims 1 to 4, **characterised in that** the or each lug (30, 32) is mounted by welding or gluing to the grating (8).

7. Front assembly (2) according to any one of the preceding claims, **characterised in that** the or each lug (30, 32) delimits an opening (36) receiving a fastening means for integral attachment of the sensor (10) to the lug (30, 32).

8. Front assembly (2) according to any one of the preceding claims, **characterised in that** the grating (8) has a lug (30, 32) on each end.

9. Front assembly (2) according to any one of the preceding claims, **characterised in that** the or each lug (30, 32) has a shank (38) integrated to the lug (30, 32), said shank (38) receiving a rod for integral attachment of the sensor (10) to the lug (30, 32).

10. Front assembly (2) according to any one of claims 2 to 9, **characterised in that** the sensor is only integrally attached to the lug (30, 32) and is interposed between the lug and the inside face (20) of the bumper shield (4).

11. Front assembly (2) according to claim 5, **characterised in that** the grating (8) is moulded at least partially onto the or each sensor (10).

12. Front assembly (2) according to claim 1, **characterised in that** the sensor (10) comprises the or each lug (30, 32) and the or each lug (30, 32) is connected to the air inlet grating (8).

13. Front assembly (2) according to any one of the preceding claims, **characterised in that** the or each lug (30, 32) is separated from the inside face (20) of the bumper shield (4) by a distance of at least 50 mm.

14. Front assembly (2) according to any one of the preceding claims, **characterised in that** the or each lug (30, 32) has at least one zone for connecting to the bumper shield (4).

15. Front assembly (2) according to any one of the preceding claims, **characterised in that** the bumper shield (4) and the lug (30, 32) are made from polypropylene.

16. Motor vehicle comprising the front assembly (2) according to any one of the preceding claims.

## Patentansprüche

1. Vorderblock (2) für Kraftfahrzeug, von dem Typ, der umfasst:
einen Stoßschild (4), der wenigstens einen Teil der Struktur des Fahrzeugs umhüllt;
wenigstens einen Stoßdetektionssensor (10);
ein wenigstens teilweise hinter einer Öffnung (22) des Stoßschilds (4) angeordnetes und an diesem befestigtes Lufteinlassgitter (8), wobei dieses Gitter (8) gebildet wird durch einen Hauptteil (27), der einen Durchlass (28) eines zur Kühlung des Motors bestimmten Luftflusses abgrenzt,
**dadurch gekennzeichnet, dass** das Lufteinlassgitter (8) wenigstens einen Verbindungslappen (30, 32) umfasst, um den oder jeden Stoßdetektionssensor (10) zu befestigen, wobei der Lappen (30, 32) sich längs der Innenseite (20) des Stoßschilds (4) erstreckt.

2. Vorderblock (2) nach Anspruch 1, **dadurch gekennzeichnet, dass** der oder jeder Lappen (30, 32) an der Innenseite (20) des Stoßschilds (2) befestigt ist.

3. Vorderblock (2) nach Anspruch 2, **dadurch gekennzeichnet, dass** die Befestigung des oder jedes Lappens (30, 32) durch Löten bzw. Schweißen oder Kleben realisiert ist.

4. Vorderblock (2) nach Anspruch 2, **dadurch gekennzeichnet, dass** der oder jeder Lappen (30, 32) durch Gießen oder Formen aus einem Stück mit dem Schild (4) ist.

5. Vorderblock (2) nach einem der Ansprüche 1 bis 4, **dadurch gekennzeichnet, dass** der oder jeder Lappen (30, 32) durch Gießen oder Formen aus einem Stück mit dem Gitter (8) ist.

6. Vorderblock (2) nach einem der Ansprüche 1 bis 4, **dadurch gekennzeichnet, dass** der oder jeder Lappen (30, 32) durch Löten bzw. Schweißen oder Kleben auf das Gitter (8) montiert ist.

7. Vorderblock (2) nach einem der vorhergehenden Ansprüche, **dadurch gekennzeichnet, dass** der oder jeder Lappen (30, 32) eine Öffnung (36) umgrenzt, die eine Befestigungseinrichtung aufnimmt, um den Sensor (10) an dem Lappen (30, 32) zu befestigen.

8. Vorderblock (2) nach einem der vorhergehenden Ansprüche, **dadurch gekennzeichnet, dass** das Gitter (8) an jedem Ende einen Lappen (30, 32) umfasst.

9. Vorderblock (2) nach einem der vorhergehenden Ansprüche, **dadurch gekennzeichnet, dass** der oder jeder Lappen (30, 32) einen in den Lappen (30, 32) integrierten Schaft (38) umfasst, wobei der Schaft (38) einen Stift aufnimmt, der den Sensor (10) mit dem Lappen (30, 32) verbindet.

10. Vorderblock (2) nach einem der Ansprüche 2 bis 9, **dadurch gekennzeichnet, dass** der Sensor nur mit dem Lappen (30, 32) verbunden ist und eingefügt ist zwischen dem Lappen und der Innenseite (20) des Stoßschilds.

11. Vorderblock (2) nach Anspruch 5, **dadurch gekennzeichnet, dass** - wenigstens teilweise - das Gitter (8) auf den oder jeden Sensor (10) draufgegossen ist bzw. der oder jeder Sensor (10) und das Gitter (8) mittels Spritzguss integriert sind.

12. Vorderblock (2) nach Anspruch 1, **dadurch gekennzeichnet, dass** der Sensor (10) den oder jeden Lappen (30, 32) umfasst und der oder jeder Lappen (30, 32) mit dem Lufteinlassgitter (8) verbunden ist.

13. Vorderblock (2) nach einem der vorhergehenden Ansprüche, **dadurch gekennzeichnet, dass** der oder jeder Lappen (30, 32) durch einen Abstand von weniger als 50 mm von der Innenseite (20) des Stoßschilds (4) getrennt ist.

14. Vorderblock (2) nach einem der vorhergehenden Ansprüche, **dadurch gekennzeichnet, dass** der oder jeder Lappen (30, 32) wenigstens eine Verbindungszone mit dem Stoßschild (4) umfasst.

15. Vorderblock (2) nach einem der vorhergehenden Ansprüche, **dadurch gekennzeichnet, dass** der Stoßschild (4) und der Lappen (30, 32) aus Polypropylen sind.

16. Kraftfahrzeug mit einem Vorderblock (2) nach einem der vorhergehenden Ansprüche.
